# EUROPEAN PATENT SPECIFICATION

(11) **EP 0 386 808 B1**
(45) Date of publication and mention of the grant of the patent: **24.11.1993**
(21) Application number: 90200300.3
(22) Date of filing: 09.02.1990
(51) Int. Cl.: C08F 136/06, C08F 4/52, C08C 19/00

(54) **Method for preparing polybutadiene endowed with improved processability characteristics**
Verfahren zur Herstellung von Polybutadien mit verbesserter Verarbeitkeit
Procédé de préparation de polybutadiène ayant une usinabilité modifiée

(30) Priority: 17.02.1989 IT 1948489
(43) Date of publication of application: 12.09.1990
(73) Proprietor: ENICHEM ELASTOMERI S.r.l., 20124 Milano (IT)
(72) Inventor: Andreussi, Piero, I-20124 Milan (IT); Bianchi, Renzo, Deceased (IT); Bruzzone, Mario, I-20097 San Donato Milanese Milan (IT)
(74) Representative: Fusina, Gerolamo

(56) References cited:
- EP-A- 0 092 270
- DE-A- 1 495 370

## Description

This invention relates to a method for improving the processability of a high-1,4-cis-polybutadiene as obtained by polymerizing butadiene, dissolved in an aliphatic or a cycloaliphatic solvent and in the presence of a catalyst system based on rare-earth elements or compounds thereof.

EP-B1-0 092 270 teaches that a polybutadiene of the kind referred to above can be obtained by polymerizing butadiene, dissolved in an aliphatic or a cycloaliphatic solvent, in the presence of a catalyst system prepared from: (a) at least one rare-earth metal or a compound thereof, neodymium or its compounds being preferred; (b) al least one Al compound of formula AlR₂ R¹, wherein R is an alkyl, a cycloalkyl or an arylalkyl and R¹ is R or H; (c) at least one compound containing one or more hydroxyls, such as water, an alcohol, or a carboxylic acid; and, optionally, (d) an inorganic compound containing Cl or Br, or at least one organic halogen derivative of formula: 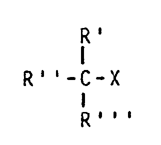
wherein R', R'' and R''', which can be the same or different from each other, are H, Cl, Br or alkyl, aryl, alkylaryl, chloro- or bromoalkyl, alkoxies or cycloalkoxy, and X is Cl or Br.

High-1,4-cis-polybutadienes obtained by this procedure usually contain at least 97% by weight of 1,4-cis units and exhibit chemical, morphological and mechanical properties which are comparable to those of the polybutadienes obtained by the agency of other catalyst systems and, in some cases, properties which are improved thereover.

It has now been ascertained that the processability of polybutadienes obtained by the agency of rare-earth based catalyst systems can be improved, in terms of a better capability by the polybutadiene of incorporating the usual fillers, by an appropriate post-treatment.

This is a remarkable advantage since certain inorganic fillers, for example the carbon blacks have a considerable bearing on the final elastic and mechanical property of the end products.

It is desirable that the incorporation of a carbon black may take place both homogeneously and rapidly. The "black incorporation time", or B.I.T., is the time which is required by an elastomer to incorporate carbon black homogeneously: a short B.I.T. is indicative of good processability, together with power savings and other cost savings in general.

The invention, as will be seen hereinafter, has not only solved the problem of good processability for the polybutadienes referred to above, but, in addition, that of improving their resistance to cold flow: this is confirmed by higher Garvey indexes as regards processability, and by the cold flow tests, the technical properties of the polybutadiene remaining unaltered.

According to the invention, therefore, there is provided a method for preparing a high-1,4-cis-containing, better processable and highly cold-flow resistant polybutadiene, by polymerizing butadiene, dissolved in a hydrocarbonaceous solvent, and in the presence of a catalyst system which is prepared from:
(a) at least one rare earth metal or a compound thereof;
(b) at least one aluminium compound of formula AlR₂R¹, wherein R is alkyl, cycloalkyl or alkylaryl, and R¹ is either R or H;
(c) at least one compound which contains one or more hydroxyls, such as water, alcohols or carboxylic acids; and, optionally
(d) an inorganic compound, which contains Cl or Br in ionizable form, or at least one organic halogen derivative of formula: 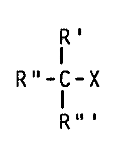 wherein R', R'' and R''', which can be the same or different from each other, are -H, -Cl, -Br, alkyl, alkylaryl, haloalkyl, haloaryl, alkoxy, or cycloalkoxy, and X is either -Cl or -Br.

further comprising the steps of:
- adding PCl₃ to the polymer solution while the Mooney viscosity value of polybutadiene is 25 as a minimum but does not exceed 30; and
- separating and recovering the polybutadiene thus obtained.

The results obtained by the method now outlined are the more suprising, since, as is well know, halogenated compounds, PCl₃ included, increase the polybutadiene molecular masses, occasionally accompanied by undesirable cross-linkings, all that being detrimental to the good processability of the elastomer.

GB-A- 1,108,585 and GB-A- 1,108,586, (Chemische Werke Hüls), describe and claim a method for increasing the molecular weight of hydrocarbon polymers, by means of the addition of a halogenated compound to the reaction mixture.

In detail, GB-A- 1,108,585 disclosed the polymerization (or copolymerization) of diolefinic monomers, in solution in an organic solvent, in the presence of a catalyst constituted by compounds of elements of the IV, V and VII Groups of the Periodic System in combination with hydro- or alkyl-halides of metals of the II or III Group and in which, at the end of the same polymerization, and when a determined degree of conversion is reached, and before the catalyst is decomposed, a halogenated compound is added to the system.

The purpose of this procedure is of obviating the drawback that can be observed when the above said catalytic systems, in the case in point based on Ti, Co, or Ni, are used, that is, that no polymer with a Mooney viscosity higher than 50 can be obtained: the addition of the halogenated compound seems to make it possible for "defined" end values of Mooney viscosity to be reached, which from the initial values of 20-50, can be as high as 90-140, an oil- extendible final product being thus obtained.

In its turn, GB-A- 1,108,586 discloses a similar method for increasing the molecular weight of polymers of unsaturated hydrocarbons, according to which, in the crosslinking step, a halogenated compound is used in combination with a second compound of general formula

RₘMeX_{y - n}

(wherein R = hydrocarbon radical; Me = As, Sb, V, Bi; and X = halogen): the purposes are as hereinabove disclosed, and the results are practically the same.

However, the increase in Mooney viscosity is not accompanied by any improvements or changes in elastomer processability.

Therefore, the object of the present invention is a method for improving the processability of a polybutadiene with a high content of 1,4-cis-structure, and its resistance to cold flow, which method consists of polymerizing butadiene in the presence of a catalytic system based on rare earths and, while the polymerization is still in course, submitting the produced polymer to a reaction of post-modification by means of the addition of PCl₃: such an addition can be carried out at any values of conversion, even if advantageous results were obtained when PCl₃ was added at conversions of 80% as a minimum, conversions of more than 95% being preferred.

In practice, the method according to the present invention is carried out through the following operating steps:
- butadiene is polymerized in solution in the presence of a catalytic system based on metals belonging to the group of rare earths, in accordance with the hereinabove given definition;
- at a time where the value of Mooney viscosity of polybutadiene has not yet exceeded 30 and the conversion is at least 80%, the preselected amounts of PCl₃ are added in order to attain the desired increase in viscosity value;
- a "short stopper" is added;
- modified polybutadiene is recovered according to the methodologies known from the prior art.

The polymerization is thus carried out in a hydrocarbon, preferably aliphatic or cycloaliphatic, solvent, at a temperature which can be selected from within a wide rage (of from -20°C up to 200°C); the use, from among the rare earths, of neodymium, praseodymium and cerium, or of derivatives thereof, results to be particularly efficient.

As outlined above, when the Mooney viscosity is at least 25, but not higher than 30, and the conversion degree of the monomer is at least 80%, and preferably is of >95%, PCl₃ is added in a prefixed amount of from 0.05% to 0.2% by weight relative to the polymer, in hydrocarbon solution, preferably the same solvent in which the polymerization has been carried out.

The reaction of post-modification is continued until the desired valve of Mooney viscosity is obtained, as a function of the programmed processability level, the temperature being kept at the same values as that of the polymerization end, and for the entire duration of the post-modification reaction.

When the treatment of polymer post-modification is over, the reaction is quenched, e.g., with water or alcohols, the elastomer being precipitated and recovered according to technologies known from the prior art.

The invention will be better illustrated by the ensuing examples.

### EXAMPLE No.1 (comparative)

740 g of anh.hexane, and 120 g of butadiene are charged, in the order given, into a reactor equipped with a stirring means. The stirred solution is then heated to 60°C and supplemented with such an amount of a solution of neodymium as the catalyst in hexane, as to correspond to 0,18 mmol/l of Nd. Said solution is prepared by causing neodymium oxide (3 mmol), naphthenic acid (24 mmol), diisobutylaluminum hydride (180 mmol) and tert.butyl chloride (9 mmol) to react together in 170 ml of hexane.

Polymerization is continued adiabatically for one hour, and the temperature of the reaction mixture rises to 110°C. This time elapsed, polymerization is quenched by adding 50 ml of water, 1% (w/w relative to the polymer) of an A.0. 2246® (Trade Mark) antioxidant. The polymer is separated by steam-stripping, and polybutadiene is thus obtained in lump form: the lumps are oven dried at 60°C for 24 hours in a vacuo.

The polybutadiene thus obtained has a Mooney viscosity of 41,5 (1+4, 100°C) and the monomer conversion, as determined by weighing the dry polymer, is 95% by weight.

The polymer microstructure pattern is:
- 1,4-cis units: 97,5%
- 1,4-trans-units : 1.5%
- 1,2-units : 1 **%**

Further properties of so obtained polybutadiene are reported in Table 1.

### Example No. 2

The process is carried out in the same way as in Example 1, except for the catalyst amount, which is increased to 0.22 mmol of neodymium/litre.

At the end of the polymerization reaction, which is again carried out for 60 minutes, the reaction temperature undergoing the same change from 60°C up to 110°C, a portion of the polymeric solution (corresponding to about 25 g of dry polymer) is drawn from the reactor and is treated with 25 ml of water in order to quench the polymerization.

An amount of 1% (w/w), relatively to the polymer, of antioxidant A.O. 2246® (Trade Mark) is then added, and the polymer is separated by steam stripping. The so obtained polybutadiene lumps are oven-dried under vacuum at 60°C for 24 hours. A polybutadiene with Mooney viscosity = 28 is obtained, with the monomer conversion being of ≧95%.

The microstructure of the polybutadiene is the same as of polybutadiene obtained in Example No. 1.

To the residual polymeric solution, kept at the temperature of 110°C, 0.088 g of PCl₃ in hexane solution (3.145 ml), corresponding to 0.1% (w/w) relatively to the existing polymer, is added. The reaction is allowed to proceed for 15 minutes, whereupon the reaction is quenched, and the subsequent operations of polybutadiene separation and recovery are carried out, in the same way as in Example No. 1.

A polybutadiene with Mooney viscosity = 40 is obtained, with the monomer conversion being of ≧95%.

The microstructure of the polybutadiene is the same as of the polybutadiene obtained in Example No. 1.

The properties of the so obtained polybutadiene are reported in Table 1.

### Example No. 3

The process is carried out in the same way as in Example No. 2, except for PCl₃ amount, which is increased to 0.176 g (corresponding to 0.2% w/w as referred to the polymer to be treated). The polybutadiene obtained by the same procedure as in Example No. 2, has a Mooney viscosity of 50, and shows a value of B.I.T. of three minutes.

A polybutadiene having the same value of Mooney viscosity, as directly resulting from the polymerization carried out in the same way as in Example No. 1, except for the catalyst amount (8.16 mmol/litre), has a B.I.T. value of 15 minutes.

### Example No. 4

The process is carried out in the same way as in Example No. 2, except for PCl₃ amount, which is increased to 0.132 g (corresponding to 0.15% w/w as referred to the polymer to be treated).

The polybutadiene obtained by the same procedure as in Example No. 2, has a Mooney viscosity of 45, and shows a value of B.I.T. of two minutes.

A polybutadiene having the same value of Mooney viscosity, as directly resulting from the polymerization carried out in the same way as in Example No. 2, except for the catalyst amount (0.17 mmol/litre), has a B.I.T. value of 13 minutes.

### Example No. 5

The process is carried in the same way as in Example 1, except for the catalyst amount, which is increased to 0.20 mmol of neodymium/litre.

The polymerization reaction is allowed to proceed under adiabatic conditions for 40 minutes; with the reaction temperature consequently increasing up to 110°C. Thereafter, a portion of the polymeric solution is drawn from the reactor and is treated with water in order to quench the polymerization; an amount of 0.1% (w/w), relative to the polymer, of antioxidant A.O. 2246 is then added to said portion, and the polymer is separated by steam stripping. The so obtained polybutadiene, after having been oven-dried under vacuum at 60°C for 24 hours, shows a Mooney viscosity = 28, the monomer conversion being of 80%.

To the residual polymeric solution, kept at the temperature of 110°C, an amount of PCl₃ is added, which corresponds to 0.1% (w/w) relative to the existing polymer.

The post-treatment process is then continued in the same way as disclosed in Example No. 2.

A polymer is obtained, whose Mooney viscosity is 41, the monomer conversion being of 80%.

The properties of this polymer are the same as of the product of Example No. 2, as set forth in Table 1.

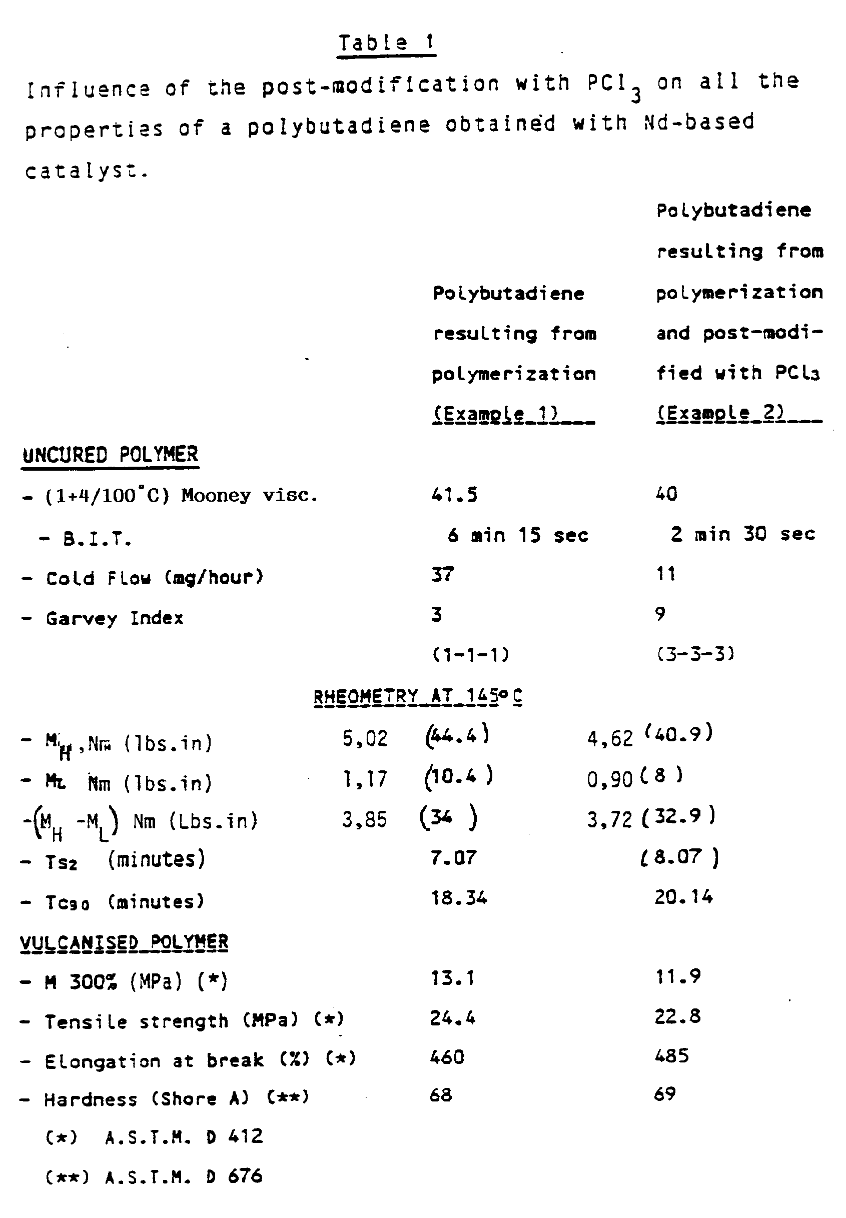

## Claims

1. A method for preparing a high-1,4-cis-containing, better processable and highly cold-flow resistant polybutadiene, by polymerizing butadiene, dissolved in a hydrocarbonaceous solvent, and in the presence of a catalyst system which is prepared from:
(a) at least one rare earth metal or a compound thereof;
(b) at least one aluminium compound of formula AlR₂R¹, wherein R is alkyl, cycloalkyl or alkylaryl, and R¹ is either R or H;
(c) at least one compound which contains one or more hydroxyls, such as water, alcohols or carboxylic acids; and, optionally
(d) an inorganic compound, which contains Cl or Br in ionizable form, or at least one organic halogen derivative of formula: 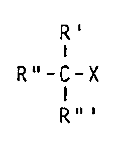 wherein R', R'' and R''', which can be the same or different from each other, are -H, -Cl, -Br, alkyl, alkylaryl, haloalkyl, haloaryl, alkoxy, or cycloalkoxy, and X is either -Cl or -Br,
further comprising the steps of:
- adding PCl₃ to the polymer solution while the Mooney viscosity value of polybutadiene is 25 as a minimum but does not exceed 30; and
- separating and recovering the polybutadiene thus obtained.

2. Method according to Claim 1, wherein PCl₃ is added in an amount of from 0,05% by weight to 0,2% by weight relative the weight of the polybutadiene.

3. Method according to Claim 1, wherein PCl₃ is added when the monomer conversion has attained 80% by weight as a minimum.

4. Method according to Claim 1, wherein the polymerization reaction is carried out at a temperature of from -20°C to +200°C, as a function of the expected Mooney viscosity value.

5. Method according to Claim 1, wherein the rare earth metal of the component (a) of the catalyst system is neodymium.

## Patentansprüche

1. Verfahren zur Herstellung eines besser verarbeitbaren und gegenüber dem kalten Fließen hochbeständigen Polybutadien mit einem hohen 1,4-cis-Gehalt, dadurch **gekenn****zeichnet,** daß man Polybutadien, aufgelöst in einem kohlenwasserstoffhaltigen Lösungsmittel und in Gegenwart eines Katalysatorsystems, hergestellt aus
(a) mindestens einem Seltenerdmetall oder einer Verbindung davon;
(b) mindestens einer Aluminiumverbindung der Formel AlR₂R¹, worin R für einen Alkyl-, Cycloalkyl- oder Alkylarylrest steht, und R¹ entweder R oder H bedeutet;
(c) mindestens eine Verbindung, die ein oder mehrere Hydroxylreste enthält, wie Wasser, Alkohole oder Carbonsäuren, und gegebenenfalls
(d) einer anorganischen Verbindung, die Cl oder Br in ionisierbarer Form enthält, oder mindestens einem organischen Halogenderivat der Formel 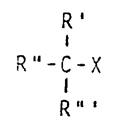 worin R', R'' und R''', die einander gleich oder voneinander verschieden sein können, für -H, -Cl, -Br, Alkyl, Alkylaryl, Halogenalkyl, Halogenaryl, Alkoxy oder Cycloalkoxy stehen, und X entweder -Cl oder -Br bedeutet, polymerisiert und weiterhin die Stufen:
- Zugabe von PCl₃ zu der Polymerlösung bis der Mooney-Viskositätswert von Polybutadien minimal 25 beträgt, aber 30 nicht überschreitet; und
- Abtrennen und Gewinnen des so erhaltenen Polybutadiens durchführt.

2. Verfahren nach Anspruch 1, dadurch **gekenn****zeichnet,** daß man PCl₃ in einer Menge von 0.05 Gew.-% bis 0,2 Gew.-%, bezogen auf das Gewicht des Polybutadiens, zusetzt.

3. Verfahren nach Anspruch 1, dadurch **gekenn****zeichnet,** daß man PCl₃ zusetzt, wenn die Monomerenumwandlung mindestens 80 Gew.-% erreicht hat.

4. Verfahren nach Anspruch 1, dadurch **gekenn****zeichnet,** daß man die Polymerisationsreaktion bei einer Temperatur von -20°C bis +200°C als Funktion des erwarteten Mooney-Viskositätswertes durchführt.

5. Verfahren nach Anspruch 1, dadurch **gekenn****zeichnet,** daß das Seltenerdmetall der Komponente (a) des Katalysatorsystems Neodym ist.

## Revendications

1. Procédé de préparation de polybutadiène à haute teneur en liaison 1,4-cis, ayant une meilleure usinabilité et une grande résistance à l'écoulement à froid, par polymérisation du butadiène, dissoud dans un solvant hydrocarboné, et en présence d'un système catalytique préparé à partir de :
(a) au moins une terre rare ou un composé de terre rare ;
(b) au moins un composé à base d'aluminium de formule AlR₂R¹, dans laquelle R est un radical alkyle, cycloalkyle ou alkylaryle, et R¹ est soit R soit l'atome d'hydrogène ;
(c) au moins un composé contenant un ou plusieurs groupes hydroxy, tel que l'eau, les alcools ou les acides carboxyliques ; et, éventuellement
(d) un composé inorganique contenant Cl ou Br sous forme ionisable, ou au moins un dérivé halogèné organique de formule : 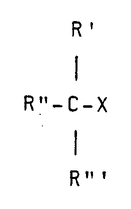
dans laquelle R', R'' et R''', identiques ou différents, désignent -H, -Cl, -Br, un radical alkyle, alkylaryle, haloalkyle, haloaryle, alcoxy ou cycloalcoxy, et X est soit -Cl soit -Br,
comprenant en outre les étapes de :
- addition de PCl₃ à la solution de polymère tant que la viscosité Mooney du polybutadiène est au moins de 25 mais n'excède pas 30 ; et
- séparation et récupération le polybutadiène ainsi obtenu.

2. Procédé selon la revendication 1, caractérisé en ce que PCl₃ est ajouté en une quantité comprise entre 0,05% en poids à 0,2% en poids par rapport au poids du polybutadiène.

3. Procédé selon la revendication 1, caractérisé en ce que PCl₃ est ajouté lorsque la conversion du monomère a atteint une valeur minimale de 80% en poids.

4. Procédé selon la revendication 1, caractérisé en ce que la réaction de polymérisation est effectuée à température comprise entre -20°C à +200°C, en fonction de la viscosité Mooney attendue.

5. Procédé selon la revendication 1, caractérisé en ce que la terre rare du composé (a) du système catalytique est le néodymium.
